# EUROPÄISCHE PATENTANMELDUNG

(11) **EP 2 179 802 A1**
(43) Veröffentlichungstag der Anmeldung: **28.04.2010**
(21) Anmeldenummer: 08405264.6
(22) Anmeldetag: 22.10.2008
(51) Int. Cl.: B09B 3/00, B09C 1/06, B09C 1/08

(54) **Verfahren zum Entfernen von vergleichsweise niedrig siedenden organischen Schadstoffen aus kontaminiertem Material**

(71) Anmelder: Eberhard Recycling AG, 8302 Kloten (CH)
(72) Erfinder: Eberhard, Heinrich, 8152 Opfikon (CH)
(74) Vertreter: Groner, Manfred

(57) **Zusammenfassung**

Zum Entfernen von vergleichsweise niedrig siedenden organischen Schadstoffen (1) aus kontaminiertem Material (2) wie beispielsweise Böden, Aushubmaterialien und Deponierückbaumaterialien, wird ein anorganischer Stoff (3) mit dem kontaminierten Material (2) vermischt. Der anorganische Stoff (3) ist ein solcher, der mit Wasser eine exotherme Reaktion eingeht. Beim Vermischen des anorganischen Stoffs (3) mit dem kontaminierten Material (2) wird Reaktionswärme gebildet, so dass die genannten organischen Schadstoffe (1) aufgrund der exothermer Reaktionswärme des anorganischen Stoffs (3) mit Wasser wenigstens teilweise verdampfen und aus dem kontaminierten Material (2) entweichen können.

## Beschreibung

Die Erfindung betrifft ein Verfahren nach dem Oberbegriff des Anspruchs 1.

Der Untergrund von alten Industriestandorten ist häufig mit organischen Chemikalien aus den industriellen Produktionsprozessen verunreinigt. Diese Chemikalien können auf verschiedenen Pfaden Bodenorganismen, Pflanzen, Tiere und Menschen schädigen. Eine direkte toxische Wirkung haben diese Schadstoffbelastungen auf die Bodenorganismen. Eine erhöhte Gefährdung für Tiere und Menschen geht insbesondere von leichflüchtigen und wasserlöslichen Schadstoffe aus, bei denen ein Stofftransfer in die Nahrungskette oder über das Grundwasser in das Trinkwasser erfolgen kann.

Beispiele für belastete Altstandorte sind Gaswerksgelände, die mit aromatischen Kohlenwasserstoffen wie Benzol, Toluol, Ethylbenzol und Xylolen (BTEX) sowie mit polyzyklischen aromatischen Kohlenwasserstoffen (PAK) belastet sind. Der Untergrund von chemischen Reinigungen ist oftmals mit chlorierten Kohlenwasserstoffen (CKW) kontaminiert, die aus undichten Wannen, Lagertanks oder bei Betriebszwischenfällen in den Boden eingesickert sind. Standorte von Tanklagern sind mit den aliphatischen Kohlenwasserstoffen (KW) der Mineralöle und Treibstoffe verunreinigt, die infolge von Havarien oder Betriebsstörungen in den Boden eingedrungen sind.

Eine besondere Stellung nehmen Aushubmaterialien ein, die beim Rückbauen und Abgraben von Deponien und Altablagerungen anfallen. In diesen Abfällen können alle genannten organischen Schadstoffe in teilweise hoher Konzentration enthalten sein. Neben der Schadwirkung, die von diesen Chemikalien ausgeht, führen insbesondere die leicht flüchtigen Stoffe bei ihrem Entweichen aus dem Abfall auch zu erheblichen Geruchsemissionen, die ein Transport und Weiterverarbeitung der Abfälle unmöglich machen können. Beim Rückbau bzw. Abgraben einer Deponie ist daher neben der Schadstoffentfrachtung auch die Minimierung etwaiger Geruchsemissionen der ausgegrabenen Abfälle vordringlichste Aufgabe.

Es sind im Stand der Technik mehrere Verfahren bekannt geworden, mit denen eine nahezu vollständige Abtrennung und Zerstörung von organischen Schadstoffen aus Böden und Aushubmaterialien möglich ist.

Biologische Reinigungsverfahren nutzen die Fähigkeit von Mikroorganismen, verschiedenste organische Schadstoffe abzubauen. Zur Erhöhung der Effizienz dieser Methode ist es häufig notwendig, den mikrobiellen Schadstoffabbau mit technischen Massnahmen zu beschleunigen. Die Abfälle müssen dazu in Mischapparaten konditioniert werden, um die für die biologischen Prozesse optimalen Mineralstoff- und Säuregehalte einzustellen. Dann werden die Abfälle zu Mieten aufgeschüttet, die zur Regulierung von Sauerstoffbedarf, Feuchte und Temperatur mit Belüftungseinrichtungen ausgestattet sind. Biologische Sanierungen erfordern grosse Behandlungsflächen und können erfahrungsgemäß erst nach mehreren Monaten abgeschlossen werden.

Bei der thermischen Bodenreinigung wird das belastete Aushubmaterial in einen Drehrohrofen eingebracht. Das Drehrohr wird entweder direkt mit einer offenen Flamme im Inneren oder indirekt über den Mantel des Rohres von aussen beheizt. Im Drehrohr stellen sich Temperaturen von 450°C bis 600°C ein, bei denen die organischen Schadstoffe verdampft werden. Eine vollständige Oxidation der Schadstoffe erfolgt in einer nachgeschalteten Verbrennungskammer bei Temperaturen von 1000°C. Die sich dabei entwickelnden Rauchgase müssen mit einer leistungsfähigen Rauchgasreinigung von Luftschadstoffen befreit werden. Die thermische Bodenbehandlung ist mit einem hohen energetischen und technischen Aufwand verbunden.

Bei der thermischen Bodenreinigung im Vakuum wird der schadstoffhaltige Boden in einen Horizontalmischer eingebracht. Während des Mischvorgangs wird im Mischer mit einer Vakuumpumpe ein Unterdruck erzeugt, gleichzeitig wird der Boden über den mit Thermalöl beheizten Mantel erwärmt. Die Thermalöltemperatur beträgt maximal 340°C. Mit dieser Art der Beheizung können Feststofftemperaturen bis 300°C erreicht werden. Der Unterdruck liegt typischerweise bei ca. 20 mbar. Die bei diesen Bedingungen gasförmigen Kohlenwasserstoffe werden über einen auf dem Mischer angeordneten Dampfdom abgezogen und in einem Kondensator kondensiert.

Durch die US 5,282,695 ist ein Verfahren bekannt geworden, bei dem das kontaminierte Material in einen Behälter gegeben und in diesen heisses Gas eingeleitet wird, um die organischen Stoffe zu verflüchtigen. Dem entstehenden Gasgemisch wird Luft beigemischt, um ein brennbares Gasgemisch zu erhalten. Das Verfahren ist ebenfalls mit einem hohen energetischen und technischen Aufwand verbunden. Die US 5,553,974 offenbart ein Verfahren zum Entfernen von flüchtigen organischen Schadstoffen mittels Dampfextraktion. Die US 5,552,051 beschreibt ein biochemisches Verfahren zum Entfernen von solchen Schadstoffen.

In Anbetracht des vorangehend genannten Standes der Technik liegt der Erfindung die Aufgabe zugrunde, eine Behandlungsmethode zu schaffen, mit der niedrig siedende organische Schadstoffe einfacher und effizient sowie ohne aufwendige technische Einrichtungen aus verunreinigten Böden und Abfallstoffen entfernt werden können.

Die Aufgabe ist bei einem gattungsgemässen Verfahren gemäss Anspruch 1 gelöst. Beim erfindungsgemässen Verfahren wird durch Zugabe eines anorganischen Stoffes eine exotherme Reaktion ausgelöst. Aufgrund der damit verursachten Temperaturerhöhung werden die vergleichsweise niedrig siedenden Schadstoffe zumindest teilweise verdampft und können dadurch entfernt werden. Das Verfahren benötigt keine weiteren Energiequellen und kann in einem üblichen Mischer durchgeführt werden und führt zumindest zu einer Geruchsneutralisation, welche beispielsweise einen Transport des behandelten Material ermöglicht.

### Detaillierte Beschreibung

In Tabelle 1 sind einige organische Schadstoffe aufgeführt, die typischerweise in Böden von alten Industriestandorten und in Deponierückbaumaterialien anzutreffen sind. Mit dem erfindungsgemässen Verfahren können diejenigen organischen Schadstoffe aus Böden und aus Deponierückbauabfällen entfernt werden, die einen Siedepunkt bis ca. 120'C bei Normaldruck haben.

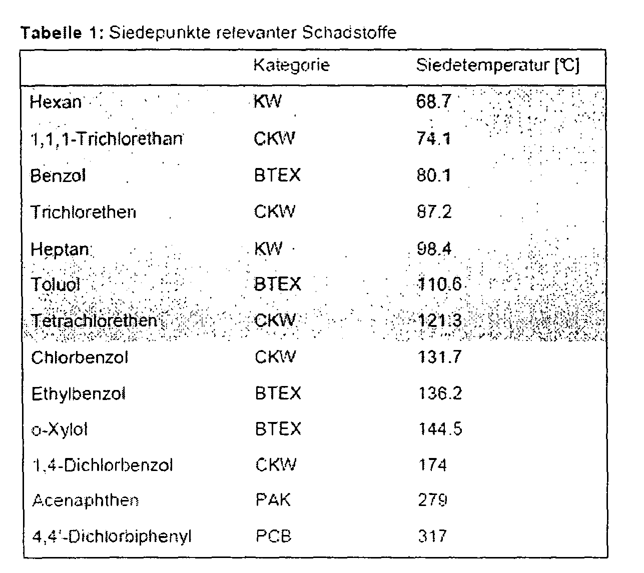

Für die Entfernung von kohlenwasserstoffdominierenden, niedrig siedenden Schadstoffbelastungen wird der kontaminierte Abfallstoff mit einer geeigneten anorganischen Stoff homogenisiert. Der anorganische Stoff kann eine anorganische Substanz oder ein Gemisch von mehreren Substanzen sein. Auf den Homogenisierungsschritt folgt die eigentliche exotherme chemische Reaktion mit dem in den Abfallstoffen enthaltenen Wasser. Geeignete anorganische Stoffe, die unter Wärmefreisetzung mit Wasser reagieren, sind insbesondere die Oxide der Alkali- und Erdalkalimetalle. Besonders geeignet ist Calciumoxid (gebrannter Kalk) aufgrund der hohen Verfügbarkeit und des vergleichsweise niedrigen Preises. Gebrannter Kalk hat die Eigenschaft, mit Wasser unter starker Wärmeentwicklung und Bildung von Calciumhydroxid zu reagieren (Kalklöschen):

CaO + H₂O → Ca(OH)₂ + 65.19 kJ

Die bei der exothermen Hydratationsreaktion frei werdende Wärme führt zu einem Temperaturanstieg in den behandelten Böden und Abfallstoffen. Dabei steigt der Dampfdruck der in ihnen enthaltenen organischen Schadstoffe an. Die Dampfdrücke der leichtflüchtigen organischen Stoffe sind bereits bei Temperaturen oberhalb von 30'C so hoch, dass diese in die Gasphase übertreten können und auf diese Weise aus dem kontaminierten Abfallstoff entfernt werden. Während der Hydroxidbildung werden die organischen Schadstoffe zudem auf die sehr viel grössere Oberfläche des gebildeten Calciumhydroxids verteilt. Diese Dispergierung der organischen Schadstoffe auf chemischem Wege ist ebenfalls entscheidend für eine wirkungsvolle Freisetzung der organischen Schadstoffe in die Gasphase.

Es hat sich gezeigt, dass die Erwärmung des Abfallstoffes von der Calciumoxidmenge abhängig ist, die in den Abfallstoff eingemischt wird. Die Menge muss so bemessen sein, dass die Abfalltemperatur bis auf 30'C, vorzugsweise bis auf etwa 50'C ansteigt, damit eine wirksame Freisetzung der unerwünschten organischen Schadstoffe in die Gasphase erfolgen kann. Die dazu erforderliche Calciumoxidmenge beträgt beispielsweise 1 bis 20 Gew.-%, vorzugsweise 5 bis 10 Gew.-% bezogen auf die Masse des feuchten Abfallstoffes.

Die beschriebene exotherme Hydratationsreaktion des Calciumoxids ist nur möglich, wenn es sich bei den Abfallstoffen um ein Zweiphasensystem mit Wasser handelt. Der Wassergehalt des Abfallstoffes muss für den vollständigen Ablauf der Reaktion ausreichend hoch sein. Bei Wassergehalten im Bereich von 10 bis 30% können die angestrebten Hydratationsreaktionen vollständig ablaufen. Ist hingegen in den kontaminierten Abfallstoffen nicht ausreichend Wasser vorhanden, kann die anorganische Verbindung keine exotherme Hydratationsreaktion eingehen, so dass keine Wärme freigesetzt wird. Es hat sich gezeigt, dass eine besonders effiziente Schadstoffentfernung erreicht werden kann, wenn der zu reinigende Abfallstoff einen Wassergehalt von mindestens 10 bis etwa 30 Gew.-% hat. Bei einem Wassergehalt unter 10 Gew.-% ist es vorzuziehen, den Abfallstoff mit zusätzlichem Wasser bis zu einem Wassergehalt von mindestens 10 Gew.-% anzufeuchten, bevor mit der Einmischung des anorganischen Stoffes begonnen wird. Es hat sich weiterhin gezeigt, dass die Abtrennung der flüchtigen anorganischen Schadstoffe dann besonders effektiv ist, wenn die anorganische Verbindung sehr homogen in den verunreinigten Boden bzw. Abfallstoff eingemischt wird. Der anorganische Stoff wird hierzu bevorzugt pulverförmig eingesetzt. Für das Mischen können Mischapparate mit schnelllaufenden Mischwerkzeugen eingesetzt werden, mit denen insbesondere bei feuchten und klumpenbildenden Böden eine starke Auflockerung und eine wirksame Desagglomeration erreicht werden kann. Besonders geeignet sind Wurfmischer, bei denen ein horizontal angeordnetes Mischwerk in einem feststehenden Behälter mit hoher Umdrehungszahl rotiert. Eine noch höhere Mischgüte kann mit Mischern erreicht werden, die sowohl drehende Mischwerkzeuge als auch einen bewegten Mischbehälter haben. Die Mischwerkzeuge ragen dabei von oben in den Behälter und rotieren gegenläufig zum sich drehenden Behälter.

Um eine besonders wirksame Schadstoffreduktion im Abfallstoff zu erreichen, muss das kontaminierte Material so lange in dem Mischapparat unter ständiger Bewegung verbleiben bis die exotherme Reaktion abgeschlossen ist. Es hat sich gezeigt, dass mit einer Temperaturmessung das Ende der exothermen Reaktion erkannt werden kann. Während des Mischvorgangs steigt die Temperatur des Abfallstoffs bis auf einen Maximalwert an und fällt anschliessend wieder ab. Nach dem Erreichen des Temperaturmaximums kann der Mischvorgang beendet werden.

Die Erfindung betrifft zudem eine Einrichtung zur Reinigung der beim Mischen entstehenden schadstoffhaltigen Abluft. Bei der Mischung des anorganischen Stoffes mit dem Boden oder Abfallstoff treten flüchtige Schadstoffe in die umgebende Luft aus. Um eine Emission dieser Schadstoffe in die Atmosphäre zu verhindern, wird die kontaminierte Luft aus dem Mischapparat abgesaugt und mit einer Abluftreinigungsanlage bestehend aus einem Staubfilter und einem Aktivkohlefilter gereinigt. Aktivkohle ist besonders geeignet, um die aus den behandelten Abfallstoffen entweichenden flüchtigen organischen Schadstoffe zu adsorbieren.

Mit der Erfindung ist es möglich, grosse Mengen an Böden und Deponierückbaumaterialien, die mit niedrig siedenden organischen Schadstoffen kontaminiert sind soweit zu reinigen, dass die Kontaminationen bis auf Restgehalte von 0.01 mg/kg reduziert werden können. Der dazu notwendige technische Aufwand und der Energieeinsatz und folglich auch die Behandlungskosten sind dabei verglichen mit anderen Verfahren deutlich geringer.

### Beispiel

Boden, der an einem ehemaligen Standort einer chemischen Reinigung ausgekoffert wurde, war mit 15 mg/kg Perchlorethylen kontaminiert und hatte einen Wassergehalt von 22%. Der Boden wurde in eine für kontaminierte Böden zugelassenen Lagerhalle transportiert und dort abgelagert. Die Bodentemperatur betrug 12'C. Der Boden wurde zusammen mit Calciumoxid in einen Mischer aufgegeben. Die Menge an Calciumoxid betrug 5 Gew.-% bezogen auf die gesamte Bodenmasse. Anschliessend wurde der Mischvorgang gestartet. Während des Mischens stieg die Temperatur im Mischer innerhalb von 10 Minuten bis auf 48'C an. Danach wurde für weitere 10 Minuten gemischt. Nach 20 Minuten wurde der Mischer entleert, und der Boden wurde repräsentativ beprobt. In der Probe betrug der Gehalt an Perchlorethylen noch 0.01 mg/kg.

Während der gesamten Mischzeit wurde die Luft aus dem Mischer kontinuierlich abgesaugt. Von der abgesaugten Luft wurden Gasproben entnommen und auf Perchlorethylen analysiert. In der abgesaugten Luft stieg die Konzentration an Perchlorethylen bis auf 22 mg/m³ an. Die abgesaugte Luft wurde durch einen Staubfilter und zwei in Serie geschaltete Aktivkohlefilter geführt. Dann erfolgte der Ausstoss der gereinigten Luft in die Atmosphäre. Von der gereinigten Luft wurde eine Probe genommen und auf Perchlorethylen analysiert. Die Konzentration von Perchlorethylen in der gereinigten Abluft betrug 0.028 mg/m³.

## Patentansprüche

1. Verfahren zum Entfernen von vergleichsweise niedrig siedenden organischen Schadstoffen aus kontaminiertem Material wie beispielsweise Böden, Aushubmaterialien und Deponierückbaumaterialien, **dadurch gekennzeichnet, dass** ein anorganischer Stoff, der mit Wasser eine exotherme Reaktion eingehen kann, mit dem kontaminierten Material vermischt wird, so dass die genannten organischen Schadstoffe aufgrund der exothermer Reaktionswärme des anorganischen Stoffs mit Wasser wenigstens teilweise verdampfen und aus dem kontaminierten Material entweichen können.

2. Verfahren nach Anspruch 1, **dadurch gekennzeichnet, dass** der anorganische Stoff wenigstens teilweise ein Oxid eines Alkali- oder Erdalkalimetalls enthält.

3. Verfahren nach Anspruch 2, **dadurch gekennzeichnet, dass** der anorganische Stoff Calciumoxid enthält oder im wesentlichen aus Calciumoxid besteht.

4. Verfahren nach einem der Ansprüche 1 bis 3, **dadurch gekennzeichnet, dass** der anorganische Stoff in einer Menge der 0.01 bis 0.2-fachen Masse des kontaminierten Materials zugegeben wird.

5. Verfahren nach einem der Ansprüche 1 bis 4, **dadurch gekennzeichnet, dass** die genannten Schadstoffe wenigstens teilweise solche sind, die zu Geruchemissionen der Abfallstoffe führen.

6. Verfahren nach einem der Ansprüche 1 bis 5, **dadurch gekennzeichnet, dass** kontaminiertem Material, dessen Wassergehalt für einen vollständigen Ablauf der Hydratationsreaktion nicht ausreichend ist, Wasser hinzugegeben wird, so dass der Wassergehalt mindestens 10 Gew.% beträgt.

7. Verfahren nach einem der Ansprüche 1 bis 6, **dadurch gekennzeichnet, dass** eine beim Mischen entstehende kontaminierte Abluft mit einem Filter und insbesondere einem Aktivkohlefilter zur Adsorption der aus den behandelten Abfallstoffen austretenden organischen Schadstoffe gereinigt wird.

8. Verfahren nach einem der Ansprüche 1 bis 7, **dadurch gekennzeichnet, dass** die genannten organischen Schadstoffe bei Normaldruck eine Siedetemperatur kleiner als etwa 130°C aufweisen.

9. Verfahren nach einem der Ansprüche 1 bis 8, **dadurch gekennzeichnet, dass** das kontaminierte Material auf etwa 30°C bis etwa 50°C erwärmt wird.

10. Verfahren nach einem der Ansprüche 1 bis 9, **dadurch gekennzeichnet, dass** der anorganische Stoff pulverförmig dem kontaminierten Material beigegeben und eingemischt wird.

11. Verfahren nach einem der Ansprüche 1 bis 10, **dadurch gekennzeichnet, dass** das kontaminierte Material und der anorganische Stoff in einem drehenden Behälter gemischt werden.

12. Verfahren nach einem der Ansprüche 1 bis 11, **dadurch gekennzeichnet, dass** die Verdampfung durch Vakuum unterstütz wird.
